(19) **Europäisches Patentamt / European Patent Office / Office européen des brevets**

(11) **EP 3 683 539 A1**

(12) # EUROPEAN PATENT APPLICATION

(43) Date of publication:
22.07.2020 Bulletin 2020/30

(51) Int Cl.:
*G01B 21/08* (2006.01)   *G01N 21/17* (2006.01)

(21) Application number: **19152535.1**

(22) Date of filing: **18.01.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **SABIC Global Technologies B.V.**
**4612 PX Bergen op Zoom (NL)**

(72) Inventors:
• **HALL, Michael**
**Selkirk, NY 12158 (US)**
• **JIANG, Eric**
**Madison, WI 53711 (US)**

(74) Representative: **Elzaburu S.L.P.**
**Miguel Angel 21, 2nd floor**
**28010 Madrid (ES)**

(54) **MULTI-LAYER THICKNESS DETECTION USING CORRECTION FACTORS FOR PHOTOACOUSTIC SPECTROSCOPY**

(57)   Methods and systems are described for determining layer thickness for layers in a multi-layer sample. Reference transmission spectral data may be determined for a first layer and a second layer. The first layer may comprise a first material associated with a first spectral band and the second layer may comprise a second material associated with a second spectral band. The first spectral band may at least partially overlap the second spectral band. The reference spectral data may be used to determine correction factors. Spectral data may be measured for the multi-layer sample. The correction factors may be used to correct the spectral data by removing the contribution of the second layer from spectral data associated with first layer.

FIG. 1A

EP 3 683 539 A1

**Description**

BACKGROUND

Photoacoustic spectroscopy (PAS), such as Fourier-transform infrared spectroscopy (FTIR) photoacoustic spectroscopy, provides a non-destructive approach for measuring properties of a sample. Photoacoustic spectroscopy can be used to determine layer thickness of multi-layered materials. In some cases, the layers in a multi-layer material may not be chemically distinguishable using PAS resulting in layer thickness measurements that are incorrect. One proposed solution is to perform sectioning of multi-layer material, but this approach is very time consuming and is not always possible. Thus, there is a need for more sophisticated techniques for determining layer thickness in a multi-layer sample.

SUMMARY

Methods and systems are disclosed for determining layer thickness of layers in a multi-layer sample. An example system may comprise an energy source configured to apply energy to a multi-layer sample comprising a first layer adjacent a second layer. The first layer may comprise a first material associated with a first spectral band. The second layer may comprise a second material associated with a second spectral band. The first spectral band may at least partially overlap the second spectral band. The system may comprise a microphone configured to detect sound waves emitted from the multi-layer sample in response to applying the energy to the multi-layer sample. The system may comprise one or more processors configured for determining spectral data indicative of the detected sound waves emitted from the multi-layer sample, determining first reference spectral data indicative of the first material in a single layer sample, and determining second reference spectral data indicative of the second material in a single layer sample. The one or more processors may be configured for determining, based on the second reference spectral data, a first correction factor. The one or more processors may be configured for determining, based on the first reference spectral data, a second correction factor. The one or more processors may be configured for determining, based on the first correction factor, the second correction factor, and the spectral data, a thickness of the first layer. The one or more processors may be configured for outputting the thickness of the first layer.

An example method may comprise determining spectral data based on photoacoustic spectrometer measurements of a multi-layer sample comprising a first layer adjacent a second layer. The first layer may comprise a first material associated with a first spectral band. The second layer may comprise a second material associated with a second spectral band, wherein the first spectral band at least partially overlaps the second spectral band. The method may comprise determining first reference spectral data indicative of the first material in a single layer sample and determining second reference spectral data indicative of the second material in a single layer sample. The method may comprise determining, based on the second reference spectral data, a first correction factor. The method may comprise determining, based on the first reference spectral data, a second correction factor. The method may comprise determining, based on the first correction factor, the second correction factor, and the spectral data, a thickness of the first layer. The method may comprise outputting the thickness of the first layer.

Additional advantages will be set forth in part in the description which follows or may be learned by practice. It is to be understood that both the foregoing general description and the following detailed description are exemplary and explanatory only and are not restrictive.

BRIEF DESCRIPTION OF THE DRAWINGS

The accompanying drawings, which are incorporated in and constitute a part of this specification, illustrate embodiments and together with the description, serve to explain the principles of the methods and systems.

Figure 1A is a block diagram illustrating an example system for determining thickness of a multi-layer sample.
Figure 1B is a graph illustrating example spectra from an example multi-layer sample.
Figure 2 is a graph showing an example phase and magnitude spectra of HLG5 laminate.
Figure 3 shows an example view of layers of the multi-layer sample.
Figure 4 is a graph showing reference spectral data of the example multi-layer sample.
Figure 5 is a graph showing in-phase and quadrature components of the spectral data.
Figure 6 is a graph showing magnitude and phase angle the example multi-layer sample.
Figure 7 shows an example view of layers of the multi-layer sample.
Figure 8 is a graph showing magnitude and phase angle the example multi-layer sample.
Figure 9 is an example output showing of results of using the methods described herein in comparison to the conventional approach to determine the layer thickness of the PC layer

Figure 10 is a diagram showing an example multi-layer sample comprising three layers.
Figure 11 is a graph showing band overlap of the multi-layer sample comprising three layers.
Figure 12 is a block diagram illustrating an example computing device.

DETAILED DESCRIPTION OF ILLUSTRATIVE EMBODIMENTS

Methods and systems are disclosed for determining layer thickness of layers in a multi-layer sample. The multi-layer sample may comprise layers that are difficult to chemically distinguish. For example, a photoacoustic spectrometer or other device may be used to apply an energy source, such as a laser, lamp, and/or other source. The multi-layer sample may produce an acoustic signal that is detected by a microphone. Spectral data may be generated based on the acoustic signal detected by the microphone. The spectral data may be used to calculated a layer thickness of one or more of the layers. However, a conventional photoacoustic spectrometer and data analysis system would yield incorrect layer thickness measurement for layers with at least partially overlapping spectral bands.

The present methods and systems improve upon conventional systems to provide more accurate layer thickness measurements using the techniques disclosed herein. Reference transmission spectral data may be determined for a first layer and a second layer of the multi-layer sample. The first layer may comprise a first material associated with a first spectral band, and the second layer may comprise a second material associated with a second spectral band. The first spectral band may at least partially overlap the second spectral band. The reference spectral data may be used to determine correction factors. Spectral data may be measured for the multi-layer sample. The correction factors may be used to correct the spectral data by removing the contribution of the second layer from spectral data associated with first layer.

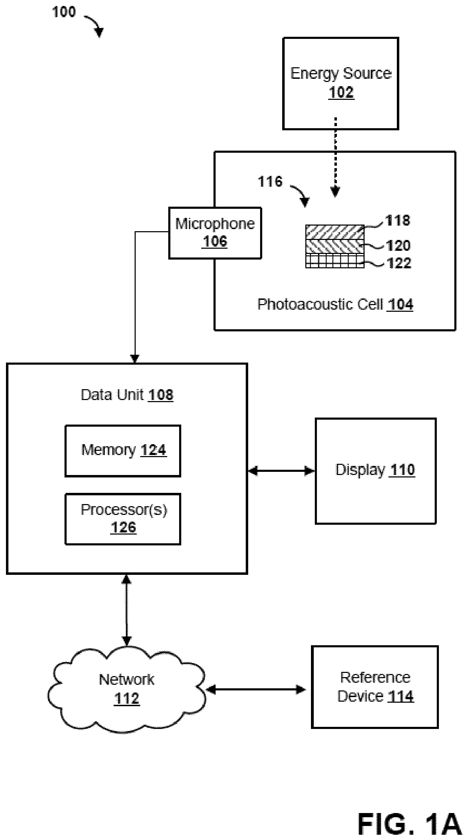

FIG. 1A is a block diagram illustrating an example system 100 for determining thickness of a multi-layer sample. The system 100 may comprise one or more of an energy source 102, a photoacoustic cell 104, and a microphone 106. The system 100 may comprise one or more of an analysis unit 108, display 110, network 112, or a reference device 114.

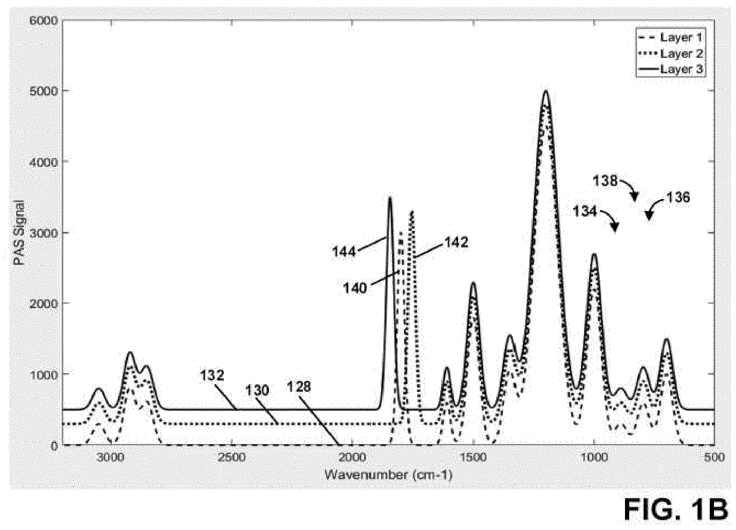

A multi-layer sample 116 may be placed inside the photoacoustic cell 104. The multi-layer sample 116 may comprise a first layer 118. The multi-layer sample 116 may comprise a second layer 120. The first layer 118 may be adjacent the second layer 120. The multi-layer sample 116 may comprise a third layer 122. The third layer 122 may be adjacent one or more of the first layer 118 or the second layer 120. The first layer 118 may comprise a first material. The second layer 120 may comprise a second material. The third layer 122 may comprise a third material. One or more of the first material, the second material, or the third material may comprise a polymer. The first material may comprise a first polymer. The second material may comprise a second polymer. The third material may comprise a third polymer. One or more of the first material, the second material, or the third material may comprise any material that absorbs infrared light. The first material, second material, and third material may have different material properties resulting in different spectral data. Spectral data associated with the multi-layer sample 116 is described further herein (e.g., FIG. 1B and FIG. 1C illustrate example spectra).

The energy source 102 may be configured to supply energy (e.g., a beam, a laser, radiation) to the photoacoustic cell 104. The energy may comprise infrared radiation. The energy source 102 may be configured to apply energy to the multi-layer sample 116. For example, the photoacoustic cell 104 may comprise an area that is transparent to the energy source, such as an infrared-transparent window.

The microphone 106 may be configured to detect sound waves emitted from the multi-layer sample 116. The microphone 106 may be at least partially disposed within the interior of the photoacoustic cell 104. The sound waves may be emitted in response to applying the energy to the multi-layer sample 116. The microphone 106 may be communicatively coupled to the data unit 108. The microphone 106 may provide signals indicative of the sound waves to the data unit 108.

The data unit 108 may be or comprise a computing device, a data acquisition, a system on a chip, a collection of circuit elements (e.g., microcontroller, memory, software instructions), and/or the like. It should be understood that additional circuit elements within or external to the data unit 108 may be used. For example, a preamplifier, amplifier, analog-to-digital converter, band-pass filter, and/or the like may be use to condition the signal from the microphone 106. The data unit 108 may be integrated with one or more of the microphone 106, energy source 102, or photoacoustic cell 104 into a single box, such as an integrated photoacoustic spectrometer. The data unit 108 may be physically separate from one or more of the microphone 106, the energy source 102, or photoacoustic cell 104. The data unit 108 may be comprised in a mobile device, laptop, tablet device, computing station, and/or the like that may be communicatively coupled with one or more of the microphone 106 or the energy source 102. The data unit 108 may provide instructions to the energy source 102 to cause the energy to be applied to the multi-layer sample 116 (e.g. according to any sequence, pattern, or other parameter). In some implementations, the energy source 102 may be controlled by a different control device, such as a computing device, controller, and/or the like.

The data unit 108 may comprise memory 124. The memory 124 may store spectral data indicative of the acoustic signal generated by the microphone 106. The memory 124 may comprise computer-readable instructions configured to cause one or more processors 126 to perform any of the actions described further herein. The data unit 108 (e.g., the one or more processors 126) may be configured to determine a layer thickness measurement of one or more of the first layer 118, the second layer 120, or the third layer 122. The data unit 108 (e.g., the one or more processors 126) may be configured determine the layer thickness measurement based on performing one or more of the following actions. One or more of the actions may be caused to be performed based on computer-readable instructions, a macro (e.g., added to a vendor supplied system), and/or the like.

Spectral data indicative of detected sound waves emitted from the multi-layer sample may be determined. FIG. 1B is a graph illustrating example spectra from the example multi-layer sample. It should be understood this the data shown in the graph is only for purposes of illustration. Spectral data may vary for different materials. As shown in FIG. 1B and FIG. 1C, the first layer 118 (e.g., or first material) may be associated with first spectral data 128 (as shown by line with long dashes). The first spectral data 128 may comprise measured data from the first layer 118. The second layer 120 (e.g., or second material) may be associated with second spectral data 130 (as shown by line with short dashes). The second spectral data 130 may comprise measured data from the second layer 120. The third layer 122 (e.g., or third material) may be associated with a third spectral data 132 (as shown by solid line). The third spectral data 132 may comprise measured data from the third layer 122. The first spectral data 128 may comprise a first plurality of spectral bands 134. The second spectral data 130 may comprise a second plurality of spectral bands 136. The third spectral data 132 may comprise a third plurality of spectral bands 138.

The first spectral data 128 may at least partially overlap with one or more of the second spectral data 130 or the third spectral data 132. The second spectral data 130 may at least partially overlap with one or more of the first spectral data 128 or the third spectral data 132. Third spectral data 132 may at least partially overlap with one or more of the first spectral data 128 or the second spectral data 130. The first plurality of spectral bands 134 may comprise a first spectral band 140. The second plurality of spectral bands 136 may comprise a second spectral band 142. The third plurality of spectral bands 138 may comprise a third spectral band 144. The first spectral band 140 may at least partially overlap with one or more of the second spectral band 142 or the third spectral band 144. The second spectral band 142 may at least partially overlap with one or more of the first spectral band 140 or the third spectral band 144. The third spectral band 144 may at least partially overlap with one or more of the first spectral band 140 or the second spectral band 142. As described further herein, data associated with one or more of the first spectral band 140, the second spectral band 142, or the third spectral band may be used to do determine layer thickness for one or more of the first layer 118, the second layer 120, or the third layer 122. It should be noted that first spectral band 140, the second spectral band 142, and the third spectral band 144 may be in a different order and/or overlapping relationship than the one shown in FIG. 1B.

Returning to FIG. 1A, spectral data indicative of the detected sound waves emitted from the multi-layer sample may be determined. Determining spectral data indicative of the detected sound waves emitted from the multi-layer sample may comprise operating the energy source and the microphone to measure an acoustic response of the multi-layer sample to the energy source. The in phase (I) and quadrature (Q) spectra of the multi-layered sample may be measured using a step scan FTIR (Fourier transform infrared) interferometer. Sound wave signals from one or more of the first layer 118, the second layer 120, or the third layer 122 may be measured (e.g., measured at the same time). Sound wave signals may be measured in a time-domain (e.g., which may be equivalent to path-difference-domain data illustrated by an interferogram). The sound wave signals may be converted (e.g., based on a Fourier transform) to wavelength domain spectra. Through Fourier transform of an interferogram, the path-difference-domain data may be converted to wavelength domain spectra. The time delay of sound wave signals from different layers with respect to infrared light radiation may be reflected by a phase angle difference. The phase angle difference may be calculated based on the phase (I) and quadrature (Q) spectra.

Reference spectral data associated with the multi-layer sample 116 may be determined. The reference spectral data may be determined by accessing the memory 124. The reference spectral data may be determined by direct measurement of one or more single layer samples. The reference spectral data may be received, via the network, from the reference device 114. The reference device 114 may comprise a data base, website, application programing interface, spectral library database, and/or the like comprising the reference spectral data. The reference spectral data may comprise transmission spectral data, such as non-saturated transmission spectrum. The reference spectral data may comprise transmission spectrum data of the materials present in each layer.

The reference spectral data may comprise first reference spectral data associated with (e.g., and indicative of) the first material. The first reference spectral data may comprise first transmission spectral data. The first reference spectral data may be indicative of the first material in a single layer sample (e.g., or other isolated form). The reference spectral data may comprise second reference spectral data associated with (e.g., and indicative of) the second material. The second reference spectral data may comprise second transmission spectral data. The second reference spectral data may be indicative of the second material in a single layer sample (e.g., or other isolated form). The reference spectral data may comprise third reference spectral data associated with the third material. The third reference spectral data may comprise third transmission spectral data. The third reference spectral data may be indicative of the third material in a single layer sample (e.g., or other isolated form). The first reference spectral data, the second reference spectral data, and/or the third reference spectral data may be determined separately.

One or more correction factors may be determined based on the reference spectral data. One or more first correction factors (e.g., factor n in equations 1-4, or factors i, j in equations 8-22 described further herein) may be determined based on one or more of the second reference spectral data or the third spectral data. One or more second correction factors (e.g., factor m in equations 1-4, or factors k, 1 in equations 8-22 described further herein) may be determined based on one or more the first reference spectral data and the third spectral data. One or more third correction factors (e.g., factors m and n in equations 8-22 described further herein) may be determined based on one or more the first reference spectral data and the second reference spectral data. The one or more first correction factors may be referred to herein as a first correction factor. The one or more second correction factors may be referred to herein as a second correction factor. The one or more third correction factors may be referred to herein as a third correction factor.

The first correction factor may comprise (e.g., or be based on) the IR absorbance peak height ratio of a first band of the second reference spectral data and a second band of the second reference spectral data. The first correction factor may comprise (e.g., or be based on) a ratio of a first peak of the third reference spectral data and a second peak of the third reference spectral data. The second correction factor may comprise (e.g., or be based on) a ratio of a first peak of the first reference spectral data and a second peak of the first reference spectral data. The second correction factor may comprise (e.g., or be based on) a ratio of a first peak of the third reference spectral data and a second peak of the third reference spectral data. The third correction factor may comprise (e.g., or be based on) a ratio of a first peak of the first reference spectral data and a second peak of the first reference spectral data. The third correction factor may comprise (e.g., or be based on) a ratio of a first peak of the second reference spectral data and a second peak of the second reference spectral data.

One or more band positions associated with peak heights in the first reference spectral data may be determined for one or more signal components of the spectral data. The one or more band positions may comprise a plurality of wavenumber positions. The one or more signal components of the spectral data may comprise an in-phase component and a quadrature component. A respective peak height may be determined at each of the one or more band positions. Peak heights may also be determined at one or more band positions in the second reference spectral data and/or the third reference spectral data. The peak heights for the first reference spectral data and/or the third reference spectral data may be used to determine the second correction factor. The peak heights for the second reference spectral data and/or the third reference spectral data may be used to determine the first correction factor. The peak heights for the second reference spectral data and/or first reference spectral data may be used to determine the third correction factor.

One or more calibrated phase angles may be determined based on the one or more corrections factors. A first calibrated phase angle (e.g., $[\Phi(1)]_{cal}$ in equations 5-7, $(\Phi_1)_{cal}$ in equations 23-27) associated with the first spectral band 140 may be determined. The first calibrated phase angle may be determined based on the first correction factor. A second calibrated phase angle (e.g., $[\Phi(2)]_{cal}$ in equations 5-7, $(\Phi_2)_{cal}$ in equations 23-27) associated with the second spectral band 142 may be determined. The second calibrated phase angle may be determined based on the second correction factor. A third calibrated phase angle (e.g., $[\Phi(2)]_{cal}$ in equations 5-7, $(\Phi_2)_{cal}$ in equations 23-27) associated with the third spectral band 144 may be determined. The third calibrated phase angle may be determined based on the third correction factor.

Determining the first calibrated phase angle associated with the first spectral band 140 may comprise determining a value of the first calibrated phase angle for each of a plurality of wavenumbers positions based on multiplying the first correction factor and a corresponding peak height of a corresponding wavenumber position. Determining the second calibrated phase angle associated with the second spectral band 142 may comprise determining a value of the second calibrated phase angle for each the plurality of wavenumber positions based on multiplying the second correction factor and a corresponding peak height of a corresponding wavenumber position.

Determining the first calibrated phase angle associated with the first spectral band 140 may comprise determining a first calibrated in-phase component associated with the first spectral band 140. The first calibrated in-phase component may be determined based on multiplying the first correction factor and an in-phase component of the spectral data associated with the second spectral band 142 (e.g., or third spectral band 144). Determining the first calibrated phase angle associated with the first spectral band 140 may comprise determining a first calibrated quadrature component associated with the first spectral band 140. The first calibrated quadrature component may be determined based on multiplying the first correction factor and a quadrature component of the spectral data associated with the second spectral band 142 (e.g., or third spectral band 144). Determining the first calibrated phase angle associated with the first spectral band 140 may comprise determining the first calibrated phase angle based on a ratio of the first calibrated in-phase component and the first calibrated quadrature component.

Determining the second calibrated phase angle associated with the second spectral band 142 may comprise determining a second calibrated in-phase component associated with the second spectral band 142. The second calibrated in-phase component may be determined based on multiplying the second correction factor and an in-phase component of the spectral data associated with the first spectral band 140 (e.g., or third spectral band 144). Determining the second calibrated phase angle associated with the second spectral band 142 may comprise determining a second calibrated quadrature component associated with the second spectral band 142. The second calibrated quadrature component may be determined based on multiplying the second correction factor and a quadrature component of the spectral data associated with the first spectral band 140 (e.g., or third spectral band 144). Determining the second calibrated phase angle associated with the second spectral band 142 may comprise determining the second calibrated phase angle based on a ratio of the second calibrated in-phase component and the second calibrated quadrature component.

Determining the third calibrated phase angle associated with the third spectral band 144 may comprise determining a third calibrated in-phase component associated with the third spectral band 144. The third calibrated in-phase component may be determined based on multiplying the third correction factor and an in-phase component of the spectral data associated with the second spectral band 142 (e.g., or first spectral band 140). Determining the third calibrated phase angle associated with the third spectral band 144 may comprise determining a third calibrated quadrature component associated with the third spectral band 144. The third calibrated quadrature component may be determined based on multiplying the third correction factor and a quadrature component of the spectral data associated with the first spectral band 140 (e.g., or second spectral band 142). Determining the third calibrated phase angle associated with the third spectral band 144 may comprise determining the third calibrated phase angle based on a ratio of the third calibrated in-phase component and the third calibrated quadrature component.

A thickness of one or more of the first layer 118, the second layer 120, or the third layer 122 may be determined based on the one or more correction factors and the spectral data. The thickness of the first layer 118 may be determined based on the first correction factor, the second correction factor, the third correction factor, and/or the spectral data. The thickness of the second layer 120 may be determined based on the first correction factor, the second correction factor, the third correction factor, and/or the spectral data. Determining the thickness of the first layer 118 may be based on determining a difference between first calibrated phase angle and the second calibrated phase angle. Determining the thickness of the second layer 120 may be based on determining a difference between the third calibrated phase angle and the second calibrated phase angle.

The thickness of one or more of the first layer 118, the second layer 120, or the third layer 122 may be output (e.g., sent, transmitted, provided, rendered, displayed, stored). The thickness may be output to the display 110. The thickness may be output to the memory 124. The thickness may be output, via the network, to another computing device.

The following is another detailed example layer thickness determination based on the methods and systems disclosed herein. The following steps may be performed by the one or more processors 126. At step 1, a multi-layered sample may be obtained. The multi-layered sample may not have resolved bands available for conventional PAS layer thickness determination using phase spectrum approach.

At step 2, a non-saturated transmission spectrum of the target components of each layer may be collected. The equivalent may be obtained from a spectral library database.

At step 3, a photoacoustic cell may be connected to a spectrometer, such as a Fourier-transform infrared spectroscopy (FTIR) spectrometer, a step scan FTIR spectrometer, and/or the like.

At step 4, reference sample may be inserted into the photoacoustic cell. The reference sample may comprise a greater than 60% carbon back filled rubber, a glassy carbon, and/or the like. The acoustic cell may be purged with Helium.

At step 5, a phase modulation frequency may be determined. The phase modulation frequency may be sufficient to reach a depth of a layer below the layer intended to be measured.

At step 6, the PAS phase angle may be optimized (e.g., by minimizing the quadrature intensity).

At step 7, the PAS cell gain may be adjusted to minimize spectral saturation.

At step 8, spectral data may be measured. The spectral data may comprise in-phase and quadrature photoacoustic spectral data of the reference material.

At step 9, a magnitude spectrum from the in-phase and quadrature spectral data may be calculated.

At step 10, the multi-layered sample may be inserted into the photoacoustic cell. The photoacoustic cell may be purged with helium.

At step 11, the PAS cell gain may be adjusted to minimize spectral saturation.

At step 12, spectral data of multi-layered sample may be determined. The spectral data may comprise in-phase and quadrature photoacoustic spectral data.

At step 13, the spectral data of multi-layered sample may be normalized. For example, the in-phase and quadrature spectral data of the sample divided by the magnitude spectrum of the reference material.

At step 14, a phase spectrum from the normalized in-phase and quadrature sample spectra may be determined.

At step 15, the phase of the largest non-saturated bands that represent the components in each layer may be measured. Step 14 and step 15 may be optional in some implementations. Step 14 and step 15 may be used to measure layer thickness without correction (e.g., for purposes of comparison)

At step 16, the peak height at the respective band positions (e.g., wavenumbers) from each reference transmission spectrum of the target components may be determined.

At step 17, correction factors (e.g., variables m and n of equations 1-4) may be determined. The correction factors may be determined by calculating peak height ratios from each reference spectrum.

At step 18, the correction factors may be multiplied by the peak height at each wavenumber position from the in-phase I(1), I(2) and quadrature spectra Q(1) and Q(2) to obtain the calibrated PAS signal at each wavenumber. The calibrated PAS signal may be calculated using equations 1-4, as shown below.

$$[I(1)]_{cal} = I(1) - n*I(2) \qquad (1)$$

$$[I(2)]_{cal} = I(2) - m*I(1) \qquad (2)$$

$$[Q(1)]_{cal} = Q(1) - n*Q(2) \qquad (3)$$

$$[Q(2)]_{cal} = Q(2) - m*Q(1) \qquad (4)$$

where 1 and 2 represents two absorption bands corresponding to absorption feature of two layers, which are partially overlapped, I represents in-phase normalized spectral intensity, Q represents quadrature normalized spectral intensity, the subscript "cal" denotes calibrated values of intensity or phase angle, the variables "m" and "n" represent band ratio factors (or correction factors) of the two bands from the corresponding (unsaturated) spectra of pure components. As explained further herein, equations 1-4 can be extended to three bands analysis where 3 bands are partially overlapped with each other. For example, one central band may have two side bands on the central band's left and right respectively, which correspond to the absorption features of the three layers of a multilayered sample.

At step 19, the values determined in step 18 may be used to calculate the calibrated phase angle at each wavenumber. Equations 5-6 may be used for calculating the calibrated phase angle at each wavenumber, as shown below.

$$[\Phi(1)]_{cal} = \arctan \frac{[Q(1)]cal}{[I(1)]cal} \qquad (5)$$

$$[\Phi(2)]_{cal} = \arctan \frac{[Q(2)]cal}{[I(2)]cal} \qquad (6)$$

where $\Phi(1)_{cal}$ represents the calibrated phase angle of the first layer, and $\Phi(2)_{cal}$ represents the calibrated phase angle of the second layer.

At step 19, a difference between the calibrated phase angles may be determined. The difference may be multiplied by the thermal diffusion depth (D) to determine the layer thickness. Equation 7 may be used for calculating the layer thickness, as shown below.

$$[\Phi(1)]cal - [\Phi(2)]cal * D \qquad (7)$$

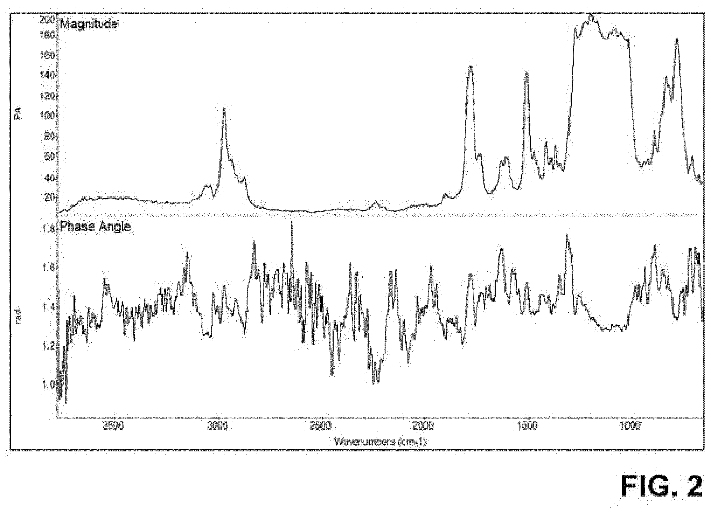

The methods and systems described herein are illustrated further by use of the following examples and results. FIG. 2 is a graph showing an example phase and magnitude spectra of HLG5 laminate. In the photoacoustic spectroscopy infrared red (PAS-IR) magnitude spectra, the acrylic C=O from the primer is observed at 1732 $cm^{-1}$. In this example measurement, this band is the only primer band that was detected and is unfortunately partially overlapped with the C=O stretch of polycarbonate at 1775 $cm^{-1}$ complicating layer thickness measurements. The application of the algorithm described in equations 1-7 is illustrated by example using a sample of HLG5 laminate. The results are shown in Tables 1 and 2. Table 1 shows example calculations for overlapping factors of two slightly overlapped bands from poly(methyl methacrylate) (PMMA) and polycarbonate (PC) layer.

**Table 1.**

| Layer | Distinctive Bands | Peak Intensity from pure PMMA (layer 1) or Pure PC (layer 2) absorbance spectrum | | Overlapping Factor |
|---|---|---|---|---|
| Layer 1 Top (thin) - PMMA | Band 1 (1732 cm⁻¹) I(1), Q(1) | Peak at 1775 cm⁻¹ = 0.079 | Peak at 1732 cm⁻¹ = 0.998 | m=0.079/0.998=7.92% (for band 2 calibration) |
| Layer 2 Bottom (thick) - PC | Band 2 (1775 cm⁻¹) I(2), Q(2) | Peak at 1732 cm⁻¹ = 0.052 | Peak at 1775 cm⁻¹ = 0.657 | n=0.052/0.657=7.91% (for band 1 calibration) |

Table 2 shows the results of calculating calibrated intensity and phase angle values by using Equations 1-4.

**Table 2.**

| Raw data from ratioed I and Q spectra at 800 Hz PMF | | Overlapping factors from Table 2 | | Calibrated I(1) and Q(1) intensity | | Calibrated Phase Φ (1)$_{cal}$ (rad) | Calibrated I(2) and Q(2) intensity | | Calibrated Phase Φ (2)$_{cal}$ (rad) |
|---|---|---|---|---|---|---|---|---|---|
| Band 1 1732 cm⁻¹ | Band 2 1775 cm⁻¹ | | | I(1)$_{cal}$ | Q(1)$_{cal}$ | | I(2)$_{cal}$ | Q (2)$_{cal}$ | |
| I(1) = 0.991 | I(2) = 2.298 | m | 0.0792 | 0.8092 | | 0.3808 | 2.220 | | 0.4436 |
| Q(1) = 0.41 | Q(2) = 1.087 | n | 0.0791 | | 0.3240 | | | 1.055 | |

The primer layer thickness was calculated based on the calibrated band intensities and phase angles for HLG5. Thickness based on calibrated phase angles:

$$d = \Delta\,\Phi(cal)\mu = (0.4436 - 0.3808) \times 6.3\mu m = 0.4\mu m$$

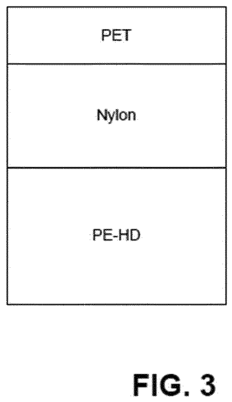

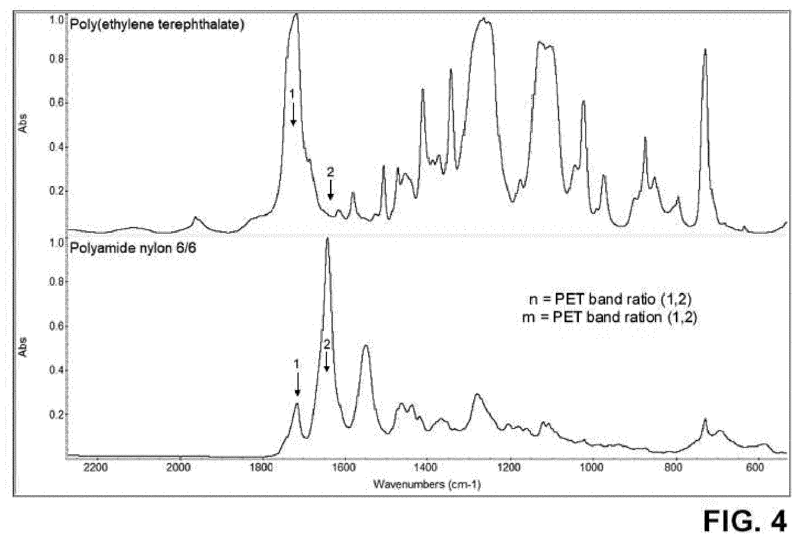

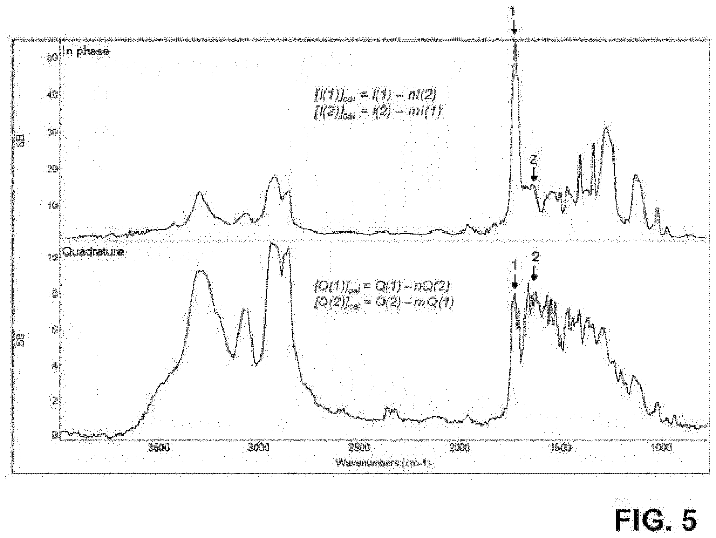

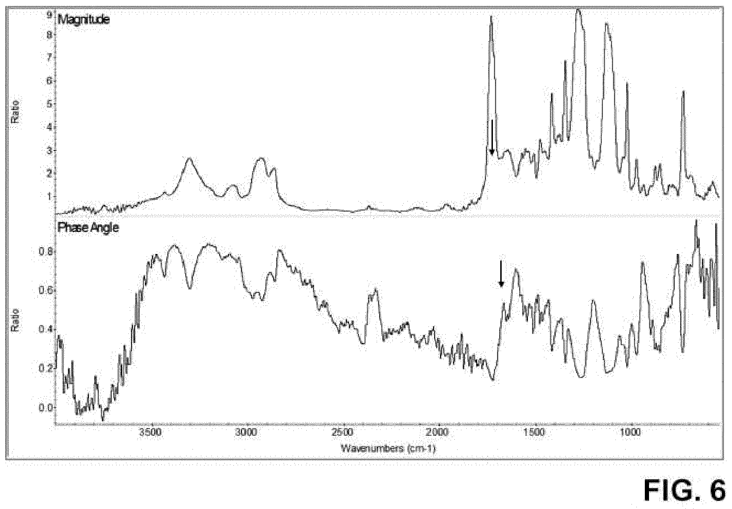

FIGS. 3-6 shows an example multi-layer sample comprising a polyethylene terephthalate (PET,) Nylon, and high-density polyethylene (PE-HD). The multi-layer sample was known to have a PET layer of 3 μm, a Nylon layer of 17 μm, and a PE-HD layer. FIG. 3 shows an example view of layers of the multi-layer sample. FIG. 4 is a graph showing reference spectral data of the example multi-layer sample. FIG. 5 is a graph showing in-phase and quadrature components of the spectral data. FIG. 6 is a graph showing magnitude and phase angle the example multi-layer sample. Table 3 shows a comparison of results of using the methods described herein in comparison to the conventional approach to determine the layer thickness of the PET layer. The results show that the disclosed approach is more accurate.

**Table 3.**

| Φ 1728 cm⁻¹ | Φ 1641 cm⁻¹ | D | Approach | Layer thickness (μm) |
|---|---|---|---|---|
| 0.148 | .470 | 8 | Phase spectrum | 2.6 |
| 0.145 | 0.525 | 8 | Corrected I&Q spectra | 3.0 |

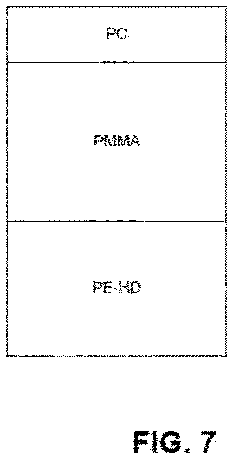

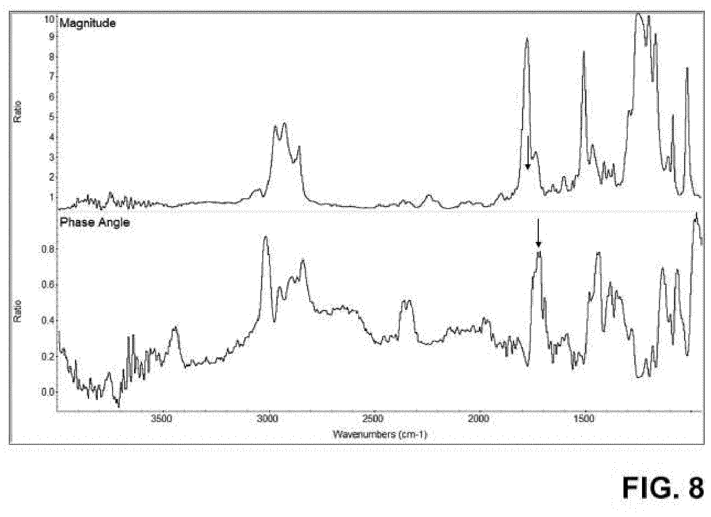

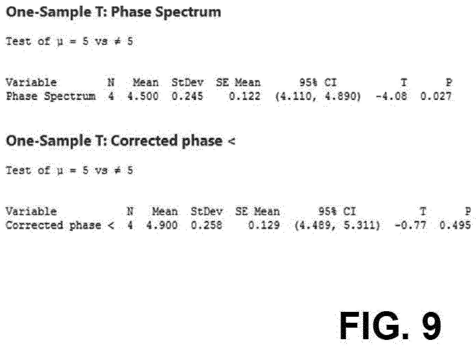

FIGS. 7-9 shows another example multi-layer sample comprising PC, PMMA, and PE-HD. FIG. 7 shows an example view of layers of the multi-layer sample. The multi-layer sample was known to have a PC layer of 5 μm, a PMMA layer of 50 μm, and a PE-HD layer. FIG. 8 is a graph showing magnitude and phase angle the example multi-layer sample. FIG 9 is an example output showing of results of using the methods described herein in comparison to the conventional approach to determine the layer thickness of the PC layer. Table 4 shows a summary of results of the layer calculation. The results show that the disclosed approach is more accurate.

**Table 4.**

| Approach | Layer thickness μm) |
|---|---|
| Phase spectrum | 4.8 |
| | 4.3 |
| | 4.6 |
| | 4.3 |
| Corrected phase < | 5.2 |
| | 4.8 |
| | 5.0 |
| | 4.6 |

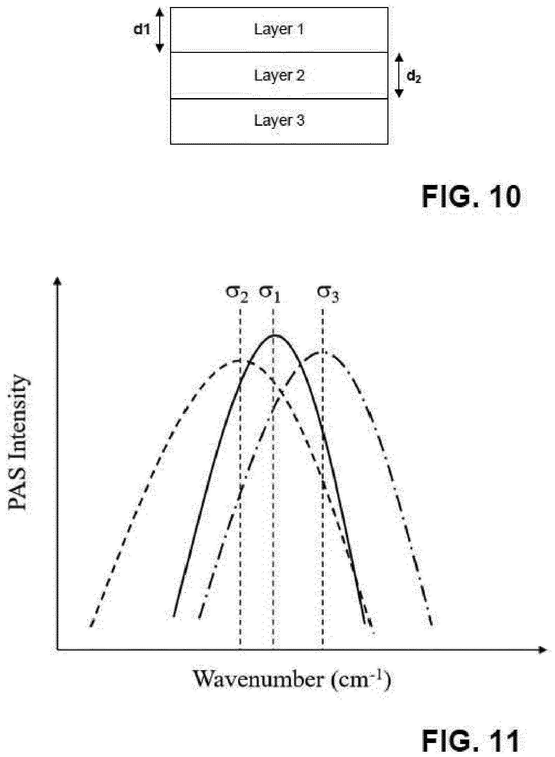

The following is an example of how the methods and systems herein may be applied in the context of determining layer thickness for 2 or more layers (e.g., if 3 or more layers are present). FIG. 10 is a diagram showing an example multi-layer sample comprising three layers. The multi-layer sample may comprise layer 1 (top layer), layer 2 (middle layer), and layer 3 (bottom layer). The disclosed techniques may be applied to determine the thickness ($d_1$) of layer 1 and the thickness ($d_2$) of layer 2.

FIG. 11 is a graph showing band overlap of the multi-layer sample comprising three layers. The layer thickness correction can be expanded to multi-layered samples which exhibit spectral interferences from more than one layer as explained in more detail herein. The disclosed techniques may be used to determine several parameters described as follows. The symbols $\sigma_1$, $\sigma_2$, and $\sigma_3$ are the peak locations of the three distinctive absorption bands for layers 1, 2 and 3 respectively. In this example, all three bands are overlapped with each other. $P_1$, $P_2$ and $P_3$, which are PAS intensities of the distinctive bands, may be measured with Step-Scan PAS before calibration. $(P_1)_{cal}$, $(P_2)_{cal}$ and $(P_3)_{cal}$ are calibrated PAS intensities of the three distinctive bands measured with Step-Scan PAS. P represents either I (in-phase) or Q (quadrature) channel PAS intensities that were directly measured in Step-scan PAS experiments. $A_1$, $A_2$ and $A_3$ are absorbance or absorption band intensities, respectively of the 3 pure layer materials measured with spectral saturation free method such as a transmission-based method. The symbols $d_1$ and $d_2$ are thicknesses of layers 1 and 2 respectively.

The following 6 coefficients (i, j, k, l, m, and n) may be determined and used in PAS intensity calibration for more accurate thickness determinations of 3-layer materials.

$$i = \frac{(A_2)_{\sigma 1}}{(A_2)_{\sigma 2}} \tag{8}$$

$$j = \frac{(A_3)_{\sigma 1}}{(A_3)_{\sigma 3}} \tag{9}$$

$$k = \frac{(A_1)_{\sigma 2}}{(A_1)_{\sigma 1}} \tag{10}$$

$$l = \frac{(A_3)_{\sigma 2}}{(A_3)_{\sigma 3}} \tag{11}$$

$$m = \frac{(A_1)_{\sigma 3}}{(A_1)_{\sigma 1}} \tag{12}$$

$$n = \frac{(A_2)_{\sigma 3}}{(A_2)_{\sigma 2}} \tag{13}$$

where $(A_2)_{\sigma 1}$ and $(A_2)_{\sigma 2}$ represent the absorbance intensities of pure layer 2 material, measured with a transmission-based method at wavenumber (wavelength) $\sigma_1$ and $\sigma_2$ respectively. Likewise, similar definitions for the A terms apply to all other coefficients.

Spectral intensity calibration may be performed as follows. The 6 coefficients described above may be used in three groups: i and j may be used for $P_1$ intensity calibration; k and 1 for $P_2$ intensity calibration; and, m and n for $P_3$ intensity calibration. The PAS intensity calibration can then be expressed as follows:

$$(P_1)_{cal} = P_1 - iP_2 - jP_3 \qquad (14)$$

$$(P_2)_{cal} = P_2 - kP_1 - lP_3 \qquad (15)$$

$$(P_3)_{cal} = P_3 - mP_1 - nP_2 \qquad (16)$$

The above three formulas combining with the definitions of the 6 codifications may be used to calibrate the two orthogonal PAS spectral intensities, I and Q, and therefore $(I)_{cal}$ and $(Q)_{cal}$ may be expressed as follows:

$$(I_1)_{cal} = I_1 - iI_2 - jI_3 \qquad (17)$$

$$(I_2)_{cal} = I_2 - kI_1 - lI_3 \qquad (18)$$

$$(I_3)_{cal} = I_3 - mI_1 - nI_2 \qquad (19)$$

$$(Q_1)_{cal} = Q_1 - iQ_2 - jQ_3 \qquad (20)$$

$$(Q_2)_{cal} = Q_2 - kQ_1 - lQ_3 \qquad (21)$$

$$(Q_3)_{cal} = Q_3 - mQ_1 - nQ_2 \qquad (22)$$

Photoacoustic phase calibration and layer thickness determination may be performed as follows. The PA phase angles maybe calibrated using the above calibrated I and Q intensities and the below equations:

$$(\Phi_1)_{cal} = \arctan\frac{(Q_1)_{cal}}{(I_1)_{cal}} \qquad (23)$$

$$(\Phi_2)_{cal} = \arctan\frac{(Q_2)_{cal}}{(I_2)_{cal}} \qquad (24)$$

$$(\Phi_3)_{cal} = \arctan\frac{(Q_3)_{cal}}{(I_3)_{cal}} \qquad (25)$$

The layer thicknesses of layers 1 and 2 can then be determined with the following formulas:

$$d_1 = \lfloor(\Phi_2)_{cal} - (\Phi_1)_{cal}\rfloor \mu_1 \qquad (26)$$

$$d_2 = \lfloor (\Phi_3)_{cal} - (\Phi_2)_{cal} \rfloor \mu_2 \qquad\qquad (27)$$

where $\mu_1$ and $\mu_2$ are thermal diffusion lengths of layer 1 and layer 2 respectively.

In various aspects, the present disclosure pertains to and includes at least the following aspects.

Aspect 1. A system comprising, consisting of, or consisting essentially of: an energy source configured to apply energy to a multi-layer sample comprising a first layer adjacent a second layer, wherein the first layer comprises a first material associated with a first spectral band and the second layer comprises a second material associated with a second spectral band, wherein the first spectral band at least partially overlaps the second spectral band; a microphone configured to detect sound waves emitted from the multi-layer sample in response to applying the energy to the multi-layer sample; and one or more processors configured for: determining spectral data indicative of the detected sound waves emitted from the multi-layer sample; determining first reference spectral data indicative of the first material in a single layer sample; determining second reference spectral data indicative of the second material in a single layer sample; determining, based on the second reference spectral data, a first correction factor; determining, based on the first reference spectral data, a second correction factor; determining, based on the first correction factor, the second correction factor, and the spectral data, a thickness of the first layer; and outputting the thickness of the first layer.

Aspect 2. The system of aspect 1, wherein the first reference spectral data comprises transmission spectral data.

Aspect 3. The system of any one of aspects 1-2, wherein one or more of the first material or the second material comprises a polymer.

Aspect 4. The system of any one of aspects 1-3, wherein determining spectral data indicative of the detected sound waves emitted from the multi-layer sample comprises operating the energy source and the microphone to measure an acoustic response of the multi-layer sample to the energy source.

Aspect 5. The system of any one of aspects 1-4, wherein the one or more processors are further configured for determining, for one or more signal components of the spectral data, one or more band positions associated with peak heights in the first reference spectral data, and determining a respective peak height at each of the one or more band positions, wherein the second correction factor is based on the peak heights.

Aspect 6. The system of aspect 5, wherein the one or more signal components of the spectral data comprise an in-phase component and a quadrature component, and wherein the one or more band positions comprise a plurality of wavenumber positions.

Aspect 7. The system of any one of aspects 1-6, wherein the first correction factor comprises a ratio of a first peak of the second reference spectral data and a second peak of the second reference spectral data, and wherein the second correction factor comprises a ratio of a first peak of the first reference spectral data and a second peak of the first reference spectral data.

Aspect 8. The system of any one of aspects 1-7, wherein the one or more processors are further configured for: determining, based on the first correction factor, a first calibrated phase angle associated with the first spectral band; determining, based on the second correction factor, a second calibrated phase angle associated with the second spectral band; and wherein determining the thickness of the first layer is based on determining a difference between first calibrated phase angle and the second calibrated phase angle.

Aspect 9. The system of aspect 8, wherein determining the first calibrated phase angle associated with the first spectral band comprises: determining a first calibrated in-phase component associated with the first spectral band, wherein the first calibrated in-phase component is determined based on multiplying the first correction factor and an in-phase component of the spectral data associated with the second spectral band, determining a first calibrated quadrature component associated with the first spectral band, wherein the first calibrated quadrature component is determined based on multiplying the first correction factor and a quadrature component of the spectral data associated with the second spectral band; and determining the first calibrated phase angle based on a ratio of the first calibrated in-phase component and the first calibrated quadrature component.

Aspect 10. The system of any one of aspects 8-9, wherein determining the second calibrated phase angle associated with the second spectral band comprises: determining a second calibrated in-phase component associated with the second spectral band, wherein the second calibrated in-phase component is determined based on multiplying the second correction factor and an in-phase component of the spectral data associated with the first spectral band; determining a second calibrated quadrature component associated with the second spectral band, wherein the second calibrated quadrature component is determined based on multiplying the second correction factor and a quadrature component of the spectral data associated with the first spectral band; and determining the second calibrated phase angle based on a ratio of the second calibrated in-phase component and the second calibrated quadrature component.

Aspect 11. The system of any one of aspects 8-10, wherein determining the first calibrated phase angle associated with the first spectral band comprises determining a value of the first calibrated phase angle for each of a plurality of wavenumbers positions based on multiplying the first correction factor and a corresponding peak height of a corresponding wavenumber position, and wherein determining the second calibrated phase angle associated with the second spectral band comprises determining a value of the second calibrated phase angle for each the plurality of wavenumber positions based on multiplying the second correction factor and a corresponding peak height of a corresponding wavenumber position.

Aspect 12. The system of any one of aspects 1-11, wherein the multi-layer sample comprises a third layer adjacent one or more of the first layer or the second layer, wherein the third layer comprises a third material associated with a third spectral band at least partially overlapping one or more of the first spectral band or the second spectral band, and further comprising: determining third reference spectral data indicative of the third material in a single layer sample; determining, based on the third reference spectral data and one or more of the first reference spectral data or the second reference spectral data, a third correction factor; and wherein determining the thickness of the first layer is based on the third correction factor.

Aspect 13. The system of aspect 12, wherein the one or more processors are further configured for: determining a third calibrated phase angle associated with the third spectral band; and determining a thickness of the second layer based on determining a difference between the third calibrated phase angle and a second calibrated phase angle associated with second layer.

Aspect 14. A method comprising, consisting of, or consisting essentially of: determining spectral data based on photoacoustic spectrometer measurements of a multi-layer sample comprising a first layer adjacent a second layer, wherein the first layer comprises a first material associated with a first spectral band and the second layer comprises a second material associated with a second spectral band, wherein the first spectral band at least partially overlaps the second spectral band; determining first reference spectral data indicative of the first material in a single layer sample; determining second reference spectral data indicative of the second material in a single layer sample; determining, based on the second reference spectral data, a first correction factor; determining, based on the first reference spectral data, a second correction factor; determining, based on the first correction factor, the second correction factor, and the spectral data, a thickness of the first layer; and outputting the thickness of the first layer.

Aspect 15. The method of aspect 14, wherein the first reference spectral data comprises transmission spectral data.

Aspect 16. The method of any one of aspects 14-15, wherein one or more of the first material or the second material comprises a polymer.

Aspect 17. The method of any one of aspects 15-16, wherein determining spectral data comprises operating an energy source and a microphone to measure an acoustic response of the multi-layer sample to the energy source.

Aspect 18. The method of any one of aspects 14-17, further comprising determining, for one or more signal components of the spectral data, one or more band positions associated with peak heights in the first reference spectral data, and determining a respective peak height at each of the one or more band positions, wherein the second correction factor is based on the peak heights.

Aspect 19. The method of aspect 18, wherein the one or more signal components of the spectral data comprise an in-phase component and a quadrature component, and wherein the one or more band positions comprise a plurality of wavenumber positions.

Aspect 20. The method of any one of aspects 14-19, wherein the first correction factor comprises a ratio of a first peak of the second reference spectral data and a second peak of the second reference spectral data, and wherein the second correction factor comprises a ratio of a first peak of the first reference spectral data and a second peak of the first reference spectral data.

Aspect 21. The method of any one of aspects 14-20, further comprising: determining, based on the first correction factor, a first calibrated phase angle associated with the first spectral band; determining, based on the second correction factor, a second calibrated phase angle associated with the second spectral band; and wherein determining the thickness of the first layer is based on determining a difference between first calibrated phase angle and the second calibrated phase angle.

Aspect 22. The method of aspects 21, wherein determining the first calibrated phase angle associated with the first spectral band comprises: determining a first calibrated in-phase component associated with the first spectral band, wherein the first calibrated in-phase component is determined based on multiplying the first correction factor and an in-phase component of the spectral data associated with the second spectral band, determining a first calibrated quadrature component associated with the first spectral band, wherein the first calibrated quadrature component is determined based on multiplying the first correction factor and a quadrature component of the spectral data associated with the second spectral band; and determining the first calibrated phase angle based on a ratio of the first calibrated in-phase component and the first calibrated quadrature component.

Aspect 23. The method of any one of aspects 21-22, wherein determining the second calibrated phase angle associated with the second spectral band comprises: determining a second calibrated in-phase component associated with the second spectral band, wherein the second calibrated in-phase component is determined based on multiplying the second correction factor and an in-phase component of the spectral data associated with the first spectral band; determining a second calibrated quadrature component associated with the second spectral band, wherein the second calibrated quadrature component is determined based on multiplying the second correction factor and a quadrature component of the spectral data associated with the first spectral band; and determining the second calibrated phase angle based on a ratio of the second calibrated in-phase component and the second calibrated quadrature component.

Aspect 24. The method of any one of aspects 21-23, wherein determining the first calibrated phase angle associated with the first spectral band comprises determining a value of the first calibrated phase angle for each of a plurality of wavenumbers positions based on multiplying the first correction factor and a corresponding peak height of a corresponding wavenumber position, and wherein determining the second calibrated phase angle associated with the second spectral band comprises determining a value of the second calibrated phase angle for each the plurality of wavenumber positions based on multiplying the second correction factor and a corresponding peak height of a corresponding wavenumber position.

Aspect 25. The method of any one of aspects 14-24, wherein the multi-layer sample comprises a third layer adjacent one or more of the first layer or the second layer, wherein the third layer comprises a third material associated with a third spectral band at least partially overlapping one or more of the first spectral band or the second spectral band, and further comprising: determining third reference spectral data indicative of the third material in a single layer sample; determining, based on the third reference spectral data and one or more of the first reference spectral data or the second reference spectral data, a third correction factor; and wherein determining the thickness of the first layer is based on the third correction factor.

Aspect 26. The method of aspects 25, further comprising determining a third calibrated phase angle associated with the third spectral band; and determining a thickness of the second layer based on determining a difference between the third calibrated phase angle and a second calibrated phase angle associated with second layer

Aspect 27. A non-transitory computer-readable medium comprising, consisting of, or consisting essentially of computer-executable instructions that, when executed by one or more processors, cause a device to perform the method of any one of aspects 14-26.

Aspect 28. A device comprising, consisting of, or consisting essentially of a processor; and a memory storing computer executable instructions that, when executed by the processor, cause the device to perform the methods of any one of aspects 14-26.

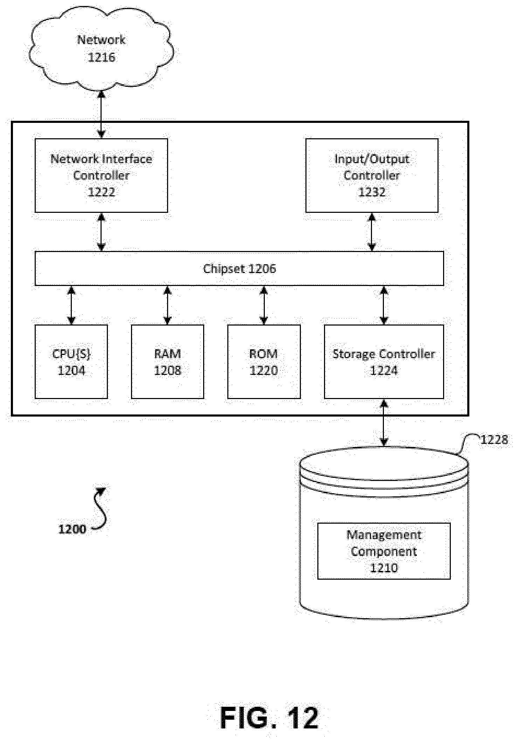

FIG. 12 depicts a computing device that may be used in various aspects, such as the data unit 108, the reference device 114, and any other device depicted in FIG. 1. The computer architecture shown in FIG. 12 shows a conventional server computer, workstation, desktop computer, laptop, tablet, network appliance, PDA, e-reader, digital cellular phone, or other computing node, and may be utilized to execute any aspects of the computers described herein, such as to implement the methods described herein.

The computing device 1200 may include a baseboard, or "motherboard," which is a printed circuit board to which a multitude of components or devices may be connected by way of a system bus or other electrical communication paths. One or more central processing units (CPUs) 1204 may operate in conjunction with a chipset 1206. The CPU(s) 1204 may be standard programmable processors that perform arithmetic and logical operations necessary for the operation of the computing device 1200.

The CPU(s) 1204 may perform the necessary operations by transitioning from one discrete physical state to the next through the manipulation of switching elements that differentiate between and change these states. Switching elements may generally include electronic circuits that maintain one of two binary states, such as flip-flops, and electronic circuits that provide an output state based on the logical combination of the states of one or more other switching elements, such as logic gates. These basic switching elements may be combined to create more complex logic circuits including registers, adders-subtractors, arithmetic logic units, floating-point units, and the like.

The CPU(s) 1204 may be augmented with or replaced by other processing units, such as GPU(s) 1205. The GPU(s) 1205 may comprise processing units specialized for but not necessarily limited to highly parallel computations, such as graphics and other visualization-related processing.

A chipset 1206 may provide an interface between the CPU(s) 1204 and the remainder of the components and devices on the baseboard. The chipset 1206 may provide an interface to a random access memory (RAM) 1208 used as the main memory in the computing device 1200. The chipset 1206 may further provide an interface to a computer-readable storage medium, such as a read-only memory (ROM) 1220 or non-volatile RAM (NVRAM) (not shown), for storing basic routines that may help to start up the computing device 1200 and to transfer information between the various components and devices. ROM 1220 or NVRAM may also store other software components necessary for the operation of the computing device 1200 in accordance with the aspects described herein.

The computing device 1200 may operate in a networked environment using logical connections to remote computing nodes and computer systems through local area network (LAN) 1216. The chipset 1206 may include functionality for providing network connectivity through a network interface controller (NIC) 1222, such as a gigabit Ethernet adapter. A NIC 1222 may be capable of connecting the computing device 1200 to other computing nodes over a network 1216. It should be appreciated that multiple NICs 1222 may be present in the computing device 1200, connecting the computing device to other types of networks and remote computer systems.

The computing device 1200 may be connected to a mass storage device 1228 that provides non-volatile storage for the computer. The mass storage device 1228 may store system programs, application programs, other program modules, and data, which have been described in greater detail herein. The mass storage device 1228 may be connected to the computing device 1200 through a storage controller 1224 connected to the chipset 1206. The mass storage device 1228 may consist of one or more physical storage units. A storage controller 1224 may interface with the physical storage units through a serial attached SCSI (SAS) interface, a serial advanced technology attachment (SATA) interface, a fiber channel (FC) interface, or other type of interface for physically connecting and transferring data between computers and physical storage units.

The computing device 1200 may store data on a mass storage device 1228 by transforming the physical state of the physical storage units to reflect the information being stored. The specific transformation of a physical state may depend on various factors and on different implementations of this description. Examples of such factors may include, but are not limited to, the technology used to implement the physical storage units and whether the mass storage device 1228 is characterized as primary or secondary storage and the like.

For example, the computing device 1200 may store information to the mass storage device 1228 by issuing instructions through a storage controller 1224 to alter the magnetic characteristics of a particular location within a magnetic disk drive unit, the reflective or refractive characteristics of a particular location in an optical storage unit, or the electrical characteristics of a particular capacitor, transistor, or other discrete component in a solid-state storage unit. Other transformations of physical media are possible without departing from the scope and spirit of the present description, with the foregoing examples provided only to facilitate this description. The computing device 1200 may further read information from the mass storage device 1228 by detecting the physical states or characteristics of one or more particular locations within the physical storage units.

In addition to the mass storage device 1228 described above, the computing device 1200 may have access to other computer-readable storage media to store and retrieve information, such as program modules, data structures, or other data. It should be appreciated by those skilled in the art that computer-readable storage media may be any available media that provides for the storage of non-transitory data and that may be accessed by the computing device 1200.

By way of example and not limitation, computer-readable storage media may include volatile and non-volatile, transitory computer-readable storage media and non-transitory computer-readable storage media, and removable and non-removable media implemented in any method or technology. Computer-readable storage media includes, but is not limited to, RAM, ROM, erasable programmable ROM ("EPROM"), electrically erasable programmable ROM ("EEPROM"), flash memory or other solid-state memory technology, compact disc ROM ("CD-ROM"), digital versatile disk ("DVD"), high definition DVD ("HD-DVD"), BLU-RAY, or other optical storage, magnetic cassettes, magnetic tape, magnetic disk storage, other magnetic storage devices, or any other medium that may be used to store the desired information in a non-transitory fashion.

A mass storage device, such as the mass storage device 1228 depicted in FIG. 12, may store an operating system utilized to control the operation of the computing device 1200. The operating system may comprise a version of the LINUX operating system. The operating system may comprise a version of the WINDOWS SERVER operating system from the MICROSOFT Corporation. According to further aspects, the operating system may comprise a version of the UNIX operating system. Various mobile phone operating systems, such as IOS and ANDROID, may also be utilized. It should be appreciated that other operating systems may also be utilized. The mass storage device 1228 may store other system or application programs and data utilized by the computing device 1200.

The mass storage device 1228 or other computer-readable storage media may also be encoded with computer-executable instructions, which, when loaded into the computing device 1200, transforms the computing device from a general-purpose computing system into a special-purpose computer capable of implementing the aspects described herein. These computer-executable instructions transform the computing device 1200 by specifying how the CPU(s) 1204 transition between states, as described above. The computing device 1200 may have access to computer-readable storage media storing computer-executable instructions, which, when executed by the computing device 1200, may perform the methods described herein.

A computing device, such as the computing device 1200 depicted in FIG. 12, may also include an input/output controller 1232 for receiving and processing input from a number of input devices, such as a keyboard, a mouse, a touchpad, a touch screen, an electronic stylus, or other type of input device. Similarly, an input/output controller 1232 may provide output to a display, such as a computer monitor, a flat-panel display, a digital projector, a printer, a plotter, or other type of output device. It will be appreciated that the computing device 1200 may not include all of the components shown in FIG. 12, may include other components that are not explicitly shown in FIG. 12, or may utilize an architecture completely different than that shown in FIG. 12.

As described herein, a computing device may be a physical computing device, such as the computing device 1200 of FIG. 12. A computing node may also include a virtual machine host process and one or more virtual machine instances. Computer-executable instructions may be executed by the physical hardware of a computing device indirectly through interpretation and/or execution of instructions stored and executed in the context of a virtual machine.

It is to be understood that the methods and systems are not limited to specific methods, specific components, or to particular implementations. It is also to be understood that the terminology used herein is for the purpose of describing particular embodiments only and is not intended to be limiting.

As used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by use of the antecedent "about," it will be understood that the particular value forms another embodiment. It will be further understood that the endpoints of each of the ranges are significant both in relation to the other endpoint, and independently of the other endpoint.

"Optional" or "optionally" means that the subsequently described event or circumstance may or may not occur, and that the description includes instances where said event or circumstance occurs and instances where it does not.

Throughout the description and claims of this specification, the word "comprise" and variations of the word, such as "comprising" and "comprises," means "including but not limited to," and is not intended to exclude, for example, other components, integers or steps. "Exemplary" means "an example of' and is not intended to convey an indication of a preferred or ideal embodiment. "Such as" is not used in a restrictive sense, but for explanatory purposes.

Components are described that may be used to perform the described methods and systems. When combinations, subsets, interactions, groups, etc., of these components are described, it is understood that while specific references to each of the various individual and collective combinations and permutations of these may not be explicitly described, each is specifically contemplated and described herein, for all methods and systems. This applies to all aspects of this application including, but not limited to, operations in described methods. Thus, if there are a variety of additional operations that may be performed it is understood that each of these additional operations may be performed with any specific embodiment or combination of embodiments of the described methods.

As will be appreciated by one skilled in the art, the methods and systems may take the form of an entirely hardware embodiment, an entirely software embodiment, or an embodiment combining software and hardware aspects. Furthermore, the methods and systems may take the form of a computer program product on a computer-readable storage medium having computer-readable program instructions (e.g., computer software) embodied in the storage medium. More particularly, the present methods and systems may take the form of web-implemented computer software. Any suitable computer-readable storage medium may be utilized including hard disks, CD-ROMs, optical storage devices, or magnetic storage devices.

Embodiments of the methods and systems are described below with reference to block diagrams and flowchart illustrations of methods, systems, apparatuses and computer program products. It will be understood that each block of the block diagrams and flowchart illustrations, and combinations of blocks in the block diagrams and flowchart illustrations, respectively, may be implemented by computer program instructions. These computer program instructions may be loaded on a general-purpose computer, special-purpose computer, or other programmable data processing apparatus to produce a machine, such that the instructions which execute on the computer or other programmable data processing apparatus create a means for implementing the functions specified in the flowchart block or blocks.

These computer program instructions may also be stored in a computer-readable memory that may direct a computer or other programmable data processing apparatus to function in a particular manner, such that the instructions stored in the computer-readable memory produce an article of manufacture including computer-readable instructions for implementing the function specified in the flowchart block or blocks. The computer program instructions may also be loaded onto a computer or other programmable data processing apparatus to cause a series of operational steps to be performed on the computer or other programmable apparatus to produce a computer-implemented process such that the instructions that execute on the computer or other programmable apparatus provide steps for implementing the functions specified in the flowchart block or blocks.

The various features and processes described above may be used independently of one another, or may be combined in various ways. All possible combinations and sub-combinations are intended to fall within the scope of this disclosure. In addition, certain methods or process blocks may be omitted in some implementations. The methods and processes described herein are also not limited to any particular sequence, and the blocks or states relating thereto may be performed in other sequences that are appropriate. For example, described blocks or states may be performed in an order other than that specifically described, or multiple blocks or states may be combined in a single block or state. The example blocks or states may be performed in serial, in parallel, or in some other manner. Blocks or states may be added to or removed from the described example embodiments. The example systems and components described herein may be configured differently than described. For example, elements may be added to, removed from, or rearranged compared to the described example embodiments.

It will also be appreciated that various items are illustrated as being stored in memory or on storage while being used, and that these items or portions thereof may be transferred between memory and other storage devices for purposes of memory management and data integrity. Alternatively, in other embodiments, some or all of the software modules and/or systems may execute in memory on another device and communicate with the illustrated computing systems via inter-computer communication. Furthermore, in some embodiments, some or all of the systems and/or modules may be implemented or provided in other ways, such as at least partially in firmware and/or hardware, including, but not limited to, one or more application-specific integrated circuits ("ASICs"), standard integrated circuits, controllers (e.g., by executing appropriate instructions, and including microcontrollers and/or embedded controllers), field-programmable gate arrays ("FPGAs"), complex programmable logic devices ("CPLDs"), etc. Some or all of the modules, systems, and data structures may also be stored (e.g., as software instructions or structured data) on a computer-readable medium, such as a hard disk, a memory, a network, or a portable media article to be read by an appropriate device or via an appropriate connection. The systems, modules, and data structures may also be transmitted as generated data signals (e.g., as part of a carrier wave or other analog or digital propagated signal) on a variety of computer-readable transmission media, including wireless-based and wired/cable-based media, and may take a variety of forms (e.g., as part of a single or multiplexed analog signal, or as multiple discrete digital packets or frames). Such computer program products may also take other forms in other embodiments. Accordingly, the present invention may be practiced with other computer system configurations.

While the methods and systems have been described in connection with preferred embodiments and specific examples, it is not intended that the scope be limited to the particular embodiments set forth, as the embodiments herein are intended in all respects to be illustrative rather than restrictive.

It will be apparent to those skilled in the art that various modifications and variations may be made without departing from the scope or spirit of the present disclosure. Other embodiments will be apparent to those skilled in the art from consideration of the specification and practices described herein. It is intended that the specification and example figures be considered as exemplary only, with a true scope and spirit being indicated by the following claims.

**Claims**

1. A system comprising:

    an energy source configured to apply energy to a multi-layer sample comprising a first layer adjacent a second layer, wherein the first layer comprises a first material associated with a first spectral band and the second layer comprises a second material associated with a second spectral band, wherein the first spectral band at least partially overlaps the second spectral band;
    a microphone configured to detect sound waves emitted from the multi-layer sample in response to applying the energy to the multi-layer sample; and
    one or more processors configured for:

        determining spectral data indicative of the detected sound waves emitted from the multi-layer sample;
        determining first reference spectral data indicative of the first material in a single layer sample;
        determining second reference spectral data indicative of the second material in a single layer sample;
        determining, based on the second reference spectral data, a first correction factor;

        determining, based on the first reference spectral data, a second correction factor;
        determining, based on the first correction factor, the second correction factor, and
        the spectral data, a thickness of the first layer; and outputting the thickness of the first layer.

2. The system of claim 1, wherein the first reference spectral data comprises transmission spectral data.

3. The system of any one of claims 1-2, wherein one or more of the first material or the second material comprises a polymer.

4. The system of any one of claims 1-3, wherein determining spectral data indicative of the detected sound waves emitted from the multi-layer sample comprises operating the energy source and the microphone to measure an acoustic response of the multi-layer sample to the energy source.

5. The system of any one of claims 1-4, wherein the one or more processors are further configured for determining, for one or more signal components of the spectral data, one or more band positions associated with peak heights in the first reference spectral data, and determining a respective peak height at each of the one or more band positions, wherein the second correction factor is based on the peak heights.

6. The system of claim 5, wherein the one or more signal components of the spectral data comprise an in-phase component and a quadrature component, and wherein the one or more band positions comprise a plurality of wavenumber positions.

7. The system of any one of claims 1-6, wherein the first correction factor comprises a ratio of a first peak of the second reference spectral data and a second peak of the second reference spectral data, and wherein the second correction factor comprises a ratio of a first peak of the first reference spectral data and a second peak of the first reference spectral data.

8. The system of any one of claims 1-7, wherein the one or more processors are further configured for:

   determining, based on the first correction factor, a first calibrated phase angle associated with the first spectral band;
   determining, based on the second correction factor, a second calibrated phase angle associated with the second spectral band; and
   wherein determining the thickness of the first layer is based on determining a difference between first calibrated phase angle and the second calibrated phase angle.

9. The system of claim 8, wherein determining the first calibrated phase angle associated with the first spectral band comprises:

   determining a first calibrated in-phase component associated with the first spectral band, wherein the first calibrated in-phase component is determined based on multiplying the first correction factor and an in-phase component of the spectral data associated with the second spectral band,
   determining a first calibrated quadrature component associated with the first spectral band, wherein the first calibrated quadrature component is determined based on multiplying the first correction factor and a quadrature component of the spectral data associated with the second spectral band; and
   determining the first calibrated phase angle based on a ratio of the first calibrated in-phase component and the first calibrated quadrature component.

10. The system of any one of claims 8-9, wherein determining the second calibrated phase angle associated with the second spectral band comprises:

    determining a second calibrated in-phase component associated with the second spectral band, wherein the second calibrated in-phase component is determined based on multiplying the second correction factor and an in-phase component of the spectral data associated with the first spectral band;
    determining a second calibrated quadrature component associated with the second spectral band, wherein the second calibrated quadrature component is determined based on multiplying the second correction factor and a quadrature component of the spectral data associated with the first spectral band; and
    determining the second calibrated phase angle based on a ratio of the second calibrated in-phase component and the second calibrated quadrature component.

11. The system of any one of claims 8-10, wherein determining the first calibrated phase angle associated with the first spectral band comprises determining a value of the first calibrated phase angle for each of a plurality of wavenumbers positions based on multiplying the first correction factor and a corresponding peak height of a corresponding wavenumber position, and wherein determining the second calibrated phase angle associated with the second spectral band comprises determining a value of the second calibrated phase angle for each the plurality of wavenumber positions based on multiplying the second correction factor and a corresponding peak height of a corresponding wavenumber position.

12. The system of any one of claims 1-11, wherein the multi-layer sample comprises a third layer adjacent one or more of the first layer or the second layer, wherein the third layer comprises a third material associated with a third spectral band at least partially overlapping one or more of the first spectral band or the second spectral band, and further comprising:

determining third reference spectral data indicative of the third material in a single layer sample;
determining, based on the third reference spectral data and one or more of the first reference spectral data or the second reference spectral data, a third correction factor; and
wherein determining the thickness of the first layer is based on the third correction factor.

13. The system of claim 12, wherein the one or more processors are further configured for:

determining a third calibrated phase angle associated with the third spectral band; and
determining a thickness of the second layer based on determining a difference between the third calibrated phase angle and a second calibrated phase angle associated with second layer.

14. A method comprising:

determining spectral data based on photoacoustic spectrometer measurements of a multi-layer sample comprising a first layer adjacent a second layer, wherein the first layer comprises a first material associated with a first spectral band and the second layer comprises a second material associated with a second spectral band, wherein the first spectral band at least partially overlaps the second spectral band;
determining first reference spectral data indicative of the first material in a single layer sample;
determining second reference spectral data indicative of the second material in a single layer sample;
determining, based on the second reference spectral data, a first correction factor;
determining, based on the first reference spectral data, a second correction factor; determining, based on the first correction factor, the second correction factor, and the spectral data, a thickness of the first layer; and
outputting the thickness of the first layer.

15. A non-transitory computer-readable medium comprising computer-executable instructions that, when executed by one or more processors, cause a device to perform the method of claim 14.

100

Energy Source
102

116

Microphone
106

118
120
122

Photoacoustic Cell 104

Data Unit 108

Memory 124

Processor(s)
126

Display 110

Network
112

Reference
Device 114

# FIG. 1A

**FIG. 1B**

EP 3 683 539 A1

FIG. 2

**FIG. 3**

FIG. 4

FIG. 5

FIG. 6

| | |
|---|
| PC |
| PMMA |
| PE-HD |

**FIG. 7**

FIG. 8

## One-Sample T: Phase Spectrum

Test of $\mu = 5$ vs $\neq 5$

| Variable | N | Mean | StDev | SE Mean | 95% CI | T | P |
|---|---|---|---|---|---|---|---|
| Phase Spectrum | 4 | 4.500 | 0.245 | 0.122 | (4.110, 4.890) | -4.08 | 0.027 |

## One-Sample T: Corrected phase <

Test of $\mu = 5$ vs $\neq 5$

| Variable | N | Mean | StDev | SE Mean | 95% CI | T | P |
|---|---|---|---|---|---|---|---|
| Corrected phase < | 4 | 4.900 | 0.258 | 0.129 | (4.489, 5.311) | -0.77 | 0.495 |

# FIG. 9

**FIG. 10**

**FIG. 11**

FIG. 12

Europäisches
Patentamt

European
Patent Office

Office européen
des brevets

**EUROPEAN SEARCH REPORT**

Application Number

EP 19 15 2535

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | BOZEC L ET AL: "Localized photothermal infrared spectroscopy using a proximal probe", JOURNAL OF APPLIED PHYSICS, AMERICAN INSTITUTE OF PHYSICS, US, vol. 90, no. 10, 15 November 2001 (2001-11-15), pages 5159-5165, XP012053558, ISSN: 0021-8979, DOI: 10.1063/1.1403671 * the whole document * | 1-15 | INV. G01B21/08 G01N21/17 |
| A | JONES R W ET AL: "QUANTITATIVE DEPTH PROFILING OF LAYERED SAMPLES USING PHASE-MODULATION FT-IR PHOTOACOUSTIC SPECTROSCOPY", APPLIED SPECTROSCOPY, THE SOCIETY FOR APPLIED SPECTROSCOPY. BALTIMORE, US, vol. 50, no. 10, 1 October 1996 (1996-10-01), pages 1258-1263, XP000642371, ISSN: 0003-7028, DOI: 10.1366/0003702963905015 * chapter II, first paragraph * | 1-15 | |
| A | WAHLS M W C ET AL: "STEP-SCAN FT-IR PHOTOACOUSTIC SPECTROSCOPY: THE SIGNAL PHASE", APPLIED SPECTROSCOPY, THE SOCIETY FOR APPLIED SPECTROSCOPY. BALTIMORE, US, vol. 51, no. 4, 1 April 1997 (1997-04-01), pages 552-557, XP000698695, ISSN: 0003-7028, DOI: 10.1366/0003702971940576 * the whole document * | 1-15 | TECHNICAL FIELDS SEARCHED (IPC) G01B G01N |

-/--

The present search report has been drawn up for all claims

| Place of search | Date of completion of the search | Examiner |
|---|---|---|
| Munich | 11 April 2019 | Beyfuß, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

**EUROPEAN SEARCH REPORT**

Europäisches
Patentamt
European
Patent Office
Office européen
des brevets

Application Number

EP 19 15 2535

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2013/029090 A1 (UNIV SOUTHERN AUSTRALIA [AU]; UNIV MONASH [AU] ET AL.) 7 March 2013 (2013-03-07) <br> * paragraph [0016]; figure 1 * <br> * paragraph [0098] - paragraph [0110] * <br> ----- | 1-15 | |

TECHNICAL FIELDS SEARCHED (IPC)

The present search report has been drawn up for all claims

| Place of search | Date of completion of the search | Examiner |
|---|---|---|
| Munich | 11 April 2019 | Beyfuß, Martin |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 19 15 2535

This annex lists the patent family members relating to the patent documents cited in the above-mentioned European search report.
The members are as contained in the European Patent Office EDP file on
The European Patent Office is in no way liable for these particulars which are merely given for the purpose of information.

11-04-2019

| Patent document cited in search report | Publication date | Patent family member(s) | Publication date |
|---|---|---|---|
| WO 2013029090 A1 | 07-03-2013 | NONE | |

For more details about this annex : see Official Journal of the European Patent Office, No. 12/82

EPO FORM P0459